# EUROPEAN PATENT APPLICATION

(11) **EP 1 676 542 A1**
(43) Date of publication of application: **05.07.2006**
(21) Application number: 04078543.8
(22) Date of filing: 30.12.2004
(51) Int. Cl.: A61C 7/14

(54) **Bracket placement device**

(71) Applicant: Della Torre, E., 20035 Lissone (MI) (IT); Grottoli, E., 20035 Lissone (MI) (IT)
(72) Inventor: Della Torre, E., 20035 Lissone (MI) (IT); Grottoli, E., 20035 Lissone (MI) (IT)

(57) **Abstract**

A stainless steel bracket placement device suited to all types of slot, comprising a ferrule operating a piston for opening and closing a catching system, held in place by a cylinder kept under pressure by a spring loaded by a cylindrical component.

## Description

### FIELD OF THE INVENTION

The present invention refers to the installation of brakets assuring the effective and efficient positioning and centering of the very braket, independently of the type of slot, while guaranteeing the ease of use.

### DESCRIPTION OF THE RELATED ART

Currently, in order to apply a bracket it is necessary to mark with a pencil the desired altimetrical position at which to fix the bracket, then, manually place each bracket on the patient in said position. Bracket installation is a lengthy and delicate process during which the doctor, using numerous positioning and centering devices, places the single bracket in such a way as to assure the best outcome of the corrective application for the patient. Each bracket is characterized by a specific type of slot.

For bracket installation, the marketplace offers a series of devices, more or less complex, comprising a large variety of altimeters to which must, at least, necessarily be associated a positioning tool and, possibly, a set of tweezers of the right shape and size to fit in the specific type of slot given.

### SUMMARY OF THE INVENTION

The doctor needs to be able to install the bracket at a specific height predetermined by the very doctor.

The present invention has been conceived with the aim to simplify the bracket positioning and centering (installation) process and to improve both effectiveness and efficiency of the process, while assuring the outmost ease of use.

Furthermore, this invention is completely in stainless steel of medical grade, a fact that renders it easy to sterilize.

Its reliability, ease of use and of maintenance make the present invention the most practical and fastest method for the installation, positioning and centering of the bracket.

The present invention offers the best repeatability and reproducibility than any other device and/or system currently available.

### BRIEF DESCRIPTION OF THE DRAWINGS

The above, features and other advantages of the present invention shall be more clearly understood from the detailed description taken in conjunction with the following accompanying drawings.

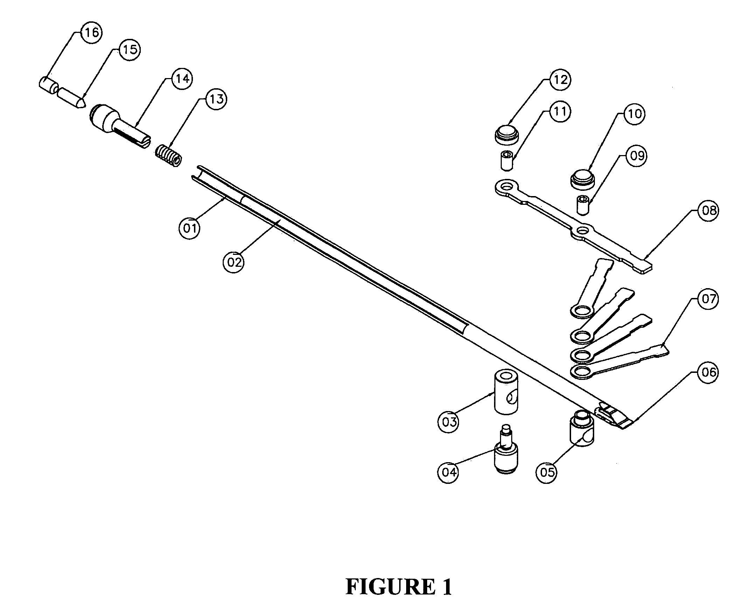

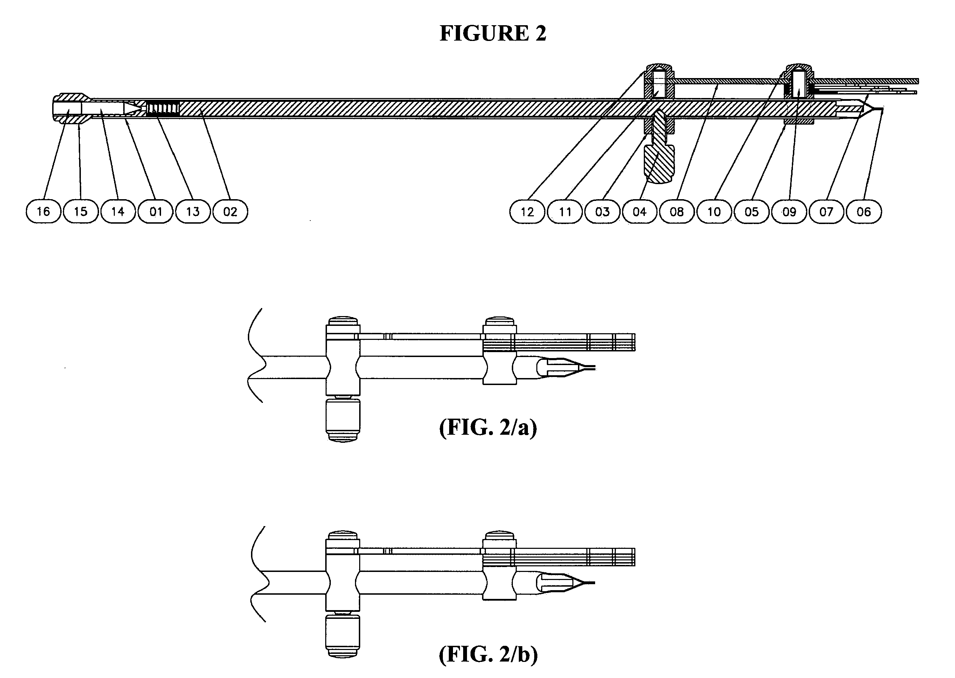

Conforming to the present invention, figure 1 (Fig. 1) is the representation of the single components in the assembly position (exploded perspective) of the positioning altimeter in which each individual component is clearly represented. Figure 2 (Fig. 2) shows, instead, the longitudinal cross-section of the assembled positioning altimeter.

### DESCRIPTION OF THE PREFERRED EMBODIMENTS

Preferred embodiments of the present invention, with reference to the enclosed drawings, are detailed hereafter.

Fig. 1 is an exploded perspective of the invention, while Fig. 2 is a longitudinal cross-section of the positioning altimeter.

With reference to each drawing, the present invention's positioner is composed of a stem (01) with a shaped end called beak (06) the action (working) of which is activated by an internal piston (02).

A cylinder (03) purposely shaped and bored, mounted onto the stem, functions as a support both for the ferrule (04) operating the piston (02) that actions the beak, and for anchoring the altimeter's maximum level or upper limit (08).

Turning the ferrule clockwise the piston (02) moves forward thus opening the positioner's beak (FIG. 2/a) that, when set into the slot, makes hold on the bracket and keeps it firmly in position; turning the ferrule counterclockwise, the piston (02) moves backward closing the beak (FIG. 2/b) and thus releasing the bracket.

A second cylinder (05) duly bored and shaped, mounted onto the stem at an equal distance from the mechanism operating the beak and the very beak, functions as a support for both the intermediate spacers (07) and the upper limit level (08).

The latter is the only fixed level spacer and it is anchored both on the spacer support cylinder (05), by means of a screw (09) and a lock ferrule (10), and on the cylinder (03) of the mechanism operating beak by means of a fixing screw (11) and a ferrule (12).

Representing equal and uniform increments of level, the spacers can, according to the need, be rotated about the axis of the support cylinder (05) to allow the correct setting of the desired altimeter level. In order to rotate any spacer, it is necessary to first release them by gently rotating counterclockwise the lock ferrule (10) for half a turn and then, with a gentle pressure of a finger, rotate the selected spacer(s) to the rest position. To block all spacers into their respective chosen position, the lock ferrule (10) must be rotated clockwise to the halt.

When in rest position, all spacers are aligned above the beak in such a way as to present the altimeter's minimum or lower limit.

Selection of the altimeter level at which to position the bracket is carried out by rotating counter clockwise one hundred and eighty degrees (180°) the intermediate spacer closest to the beak bringing it to its rest position parallel to the stem's axis within the specific lodging space between the anchoring cylinder (05) and the beak operating mechanism support cylinder (03).

Inside the stem, the mechanism operating the beak is fixed by means of a piston (02) held in place by a spring (13) locked by a shaped cylinder with an incision (14) operated by a cursor (15) that, turning the fixing screw (16), causes the cylinder (14) either to expand thus fastening it to the stem or releasing the stop allowing the disassembly of the entire internal mechanism of the altimeter.

## Claims

1. A positioning altimeter for bracket installation **characterized by** an ergonomic hold, offers an easy operation through the ferrule operating (opening and closing) the catching system for the bracket to position (install). The mechanism for catching the bracket is controlled by a ferrule that, acting directly on a specific piston causes the opening and closing of the beak; the entire catching system is held in place by means of a cylinder kept under pressure by a spring loaded by a cylindrical component (plug) at the end.

2. A positioning altimeter for bracket of which in claim 1, consisting of a single device entirely made of stainless steel of medical grade that assures the ease of sterilization.

3. A positioning altimeter for bracket of which in claim 1, whose ergonomic grip allows for the effective and efficient catch of the braket through the simple action of a ferrule operated with a finger.

4. A positioning altimeter for bracket of which in claim 1, offering simplicity and precision in setting the level at which to position the bracket, by rotating the desired intermediate spacers.

5. A positioning altimeter for bracket of which in claim 1, of which effectiveness, efficiency and precision in positioning the racket assure the outmost repeatability and reproducibility.

6. A positioning altimeter for bracket of which in claim 1, entirely suited to fit all measures of slot of all types of bracket currently available.

7. A positioning altimeter for bracket of which in claim 1,
whose characteristics of reliability, ease of manipulation, use and maintenance make it the most practical and fastest device for the installation, positioning and centering of bracket than any other tool and/or system currently available.
